(19) Europäisches Patentamt
European Patent Office
Office européen des brevets

(11) EP 2 104 166 A1

(12) EUROPEAN PATENT APPLICATION
published in accordance with Art. 153(4) EPC

(43) Date of publication:
**23.09.2009 Bulletin 2009/39**

(21) Application number: **07831874.8**

(22) Date of filing: **08.11.2007**

(51) Int Cl.:
***H01M 8/02*** *(2006.01)* ***H01M 8/10*** *(2006.01)*

(86) International application number:
**PCT/JP2007/072144**

(87) International publication number:
**WO 2008/056824 (15.05.2008 Gazette 2008/20)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **09.11.2006 JP 2006303802**

(71) Applicant: **Sumitomo Chemical Company, Limited**
**Tokyo 104-8260 (JP)**

(72) Inventors:
- **SAITO, Shin**
  **Tsukuba-shi**
  **Ibaraki 305-0005 (JP)**
- **KURODA, Ryuma**
  **Komaisu-shi**
  **Ishikawa (JP)**

(74) Representative: **Vossius & Partner**
**Siebertstraße 4**
**81675 München (DE)**

# (54) MEMBRANE-ELECTRODE ASSEMBLY

(57) There is provided a membrane-electrode assembly including catalyst layers disposed on both surfaces of an electrolyte membrane, wherein water transfer resistance of said electrolyte membrane, calculated by the following formula (F1), is 10 μm·g/meq or less and a platinum amount contained in at least one of the catalyst layers is 0.02 to 0.20 mg/cm$^2$.

[Water transfer resistance] =

[membrane thickness of electrolyte membrane (μm) ]/

[ion exchange capacity of electrolyte membrane (meq/g)]

(F1)

EP 2 104 166 A1

## Description

TECHNICAL FIELD

The present invention relates to a membrane-electrode assembly and a polymer electrolyte fuel cell provided with the membrane-electrode assembly.

BACKGROUND ART

An electrolyte membrane composed of a polymer having proton conductivity has been used as an electrolyte membrane for a primary cell, a secondary cell, a polymer electrolyte fuel cell or the like. At present, for example, a fluorine polymer electrolyte including Nafion (the registered trademark of Dupont) has been mainly studied.

In recent years, an inexpensive polymer electrolyte substitutable for the above fluorine polymer electrolyte has been actively developed for achieving far lower costs; in particular, a polymer electrolyte (a hydrocarbon polymer electrolyte) having no fluorine atoms as the main component of a polymer electrolyte has attracted attention. In particular, in addition to being inexpensively produced, an electrolyte membrane obtained from the hydrocarbon polymer electrolyte also has an advantage that it is high in heat resistance and resistant to operations at high temperature.

Incidentally, a polymer electrolyte fuel cell has been used in the form such that electrodes, called a catalyst layer, including a catalyst for promoting oxidation-reduction reaction of hydrogen and oxygen are formed on both surfaces of the above electrolyte membrane, and a gas diffusion layer for efficiently supplying the catalyst layer with gas is further placed outside the catalyst layer; platinum or an alloy containing platinum have been used as the catalyst. Here, those in which the catalyst layers are formed on both surfaces of the electrolyte membrane is ordinarily called a membrane-electrode assembly (occasionally referred to as 'MEA' hereinafter). In order to improve power generation characteristics of the fuel cell, since oxidation reaction of hydrogen and reduction reaction of oxygen in the catalyst layer of MEA need to be smoothly advanced together with an improvement in the characteristics of the above electrolyte membrane, many studies for improving the efficiency of the oxidation-reduction reaction in the catalyst layer have been made.

For example, a catalyst layer where specific surface area and porosity of a polymer electrolyte and a catalyst support in the catalyst layer vary with the thickness direction of the catalyst layer, is disclosed in Japanese Unexamined Patent Publication No. 9-245802.

Also, a method for producing a catalyst layer, wherein a catalyst powder constituting the catalyst layer is treated with electromagnetic irradiation, corpuscular irradiation and the like in the process of producing the catalyst layer, is disclosed in Japanese Unexamined Patent Publication No. 2004-152593.

DISCLOSURE OF THE INVENTION

Each of the catalyst layers disclosed in Japanese Unexamined Patent Publication Nos. 9-245802 and 2004-152593 is intended for improving power generation performance of MEA provided with the catalyst layer; however, the degree of the improvement of the power generation performance is not necessarily sufficient, and there is also a problem that the production of the catalyst layer itself becomes intricate. An object of the present invention is to provide MEA obtained by a simple producing method and excellent in power generation performance, and a polymer electrolyte fuel cell using the same.

The present inventors have completed the present invention as a result of intense studies for solving the above problems.

That is, the present invention provides the following [1] or [2].

[1] A membrane-electrode assembly comprising catalyst layers disposed on both surfaces of an electrolyte membrane, wherein water transfer resistance of said electrolyte membrane, calculated by the following formula (F1), is 10 μm·g/meq or less and a platinum amount contained in at least one of the catalyst layers is 0.02 to 0.20 mg/cm$^2$.

$$[\text{Water transfer resistance}] = [\text{membrane thickness of electrolyte membrane } (\mu m)] / [\text{ion exchange capacity of electrolyte membrane } (meq/g)] \quad (F1)$$

[2] A membrane-electrode assembly comprising an anode catalyst layer disposed on one surface of an electrolyte membrane and a cathode catalyst layer disposed on the other surface thereof, wherein water transfer resistance of said electrolyte membrane, calculated by the following formula (F1), is 10 μm·g/meq or less and a platinum amount contained in said anode catalyst layer is 0.02 to 0.20 mg/cm$^2$.

$$[\text{Water transfer resistance}] = [\text{membrane thickness of electrolyte membrane } (\mu m)] / [\text{ion exchange capacity of electrolyte membrane } (meq/g)] \quad (F1)$$

Further, the present invention provides the following [3] to [5] as preferred embodiments according to [1] or [2].
[3] The membrane-electrode assembly according to Claim 2, wherein the following formula (F2) is satisfied when the platinum amount of the cathode catalyst layer is determined as x [mg/cm$^2$] and the platinum amount of the anode catalyst layer is determined as y [mg/cm$^2$].

$$x/y \geqq 2 \qquad (F2)$$

[4] The membrane-electrode assembly according to any one of Claims 1 to 3, wherein the membrane thickness of said electrolyte membrane is 29 μm or less.
[5] The membrane-electrode assembly according to any one of Claims 1 to 4, wherein said electrolyte membrane contains a hydrocarbon polymer electrolyte.
The present invention provides [6] and [7] according to any of the foregoing membrane-electrode assembly.
[6] A polymer electrolyte fuel cell being provided with the membrane-electrode assembly according to any one of Claims 1 to 5.
[7] A method for producing a membrane-electrode assembly comprising the steps described in the following (i) and (ii);

(i) the step of producing an electrolyte membrane, such that water transfer resistance calculated by the following formula (F1) is 10 μm·g/meq or less, from a hydrocarbon polymer electrolyte; and
(ii) the step of forming a catalyst layer having a platinum amount of from 0.02 to 0.20 mg/cm$^2$ in such a manner that catalyst ink containing a catalyst material of at least one kind selected from platinum and an alloy containing platinum, a polymer electrolyte and a solvent is applied on one surface of the electrolyte membrane obtained in said (i) to thereafter remove the solvent from the membrane to which the catalyst ink is applied.

$$[\text{Water transfer resistance}] = [\text{membrane thickness of electrolyte membrane } (\mu m)] / [\text{ion exchange capacity of electrolyte membrane } (meq/g)] \quad (F1)$$

The present invention is extremely industrially useful by reason of being capable of providing MEA offering a polymer electrolyte fuel cell with power generation performance improved remarkably.

BRIEF DESCRIPTION OF THE DRAWINGS

Fig. 1 is a view schematically showing the cross-sectional configuration of a fuel cell provided with MEA obtained by a producing method of the present invention.

EXPLANATION OF REFERENCE NUMERALS

| | |
|---|---|
| 10 | fuel cell, |
| 12 | electrolyte membrane, |
| 14a | anode catalyst layer, |
| 14b | cathode catalyst layer, |
| 16a, 16b | gas diffusion layer, |
| 18a, 18b | separator, |
| 20 | MEA |

BEST MODE FOR CARRYING OUT THE INVENTION

Preferred embodiments of the present invention are hereinafter described while referring to the figure as required.

[Catalyst layer and membrane-electrode assembly]

As described above, MEA used for a polymer electrolyte fuel cell (occasionally referred to as 'fuel cell' hereinafter) has an electrolyte membrane and two catalyst layers on both surfaces of the electrolyte membrane. In the present invention, these two catalyst layers are distinguished into an anode catalyst layer as an anode and a cathode catalyst layer as a cathode when the fuel cell is assembled.

At least one of the catalyst layers used for MEA of the present invention contains a catalyst material of at least one kind selected from platinum and an alloy containing platinum, and a polymer electrolyte. An alloy used in a conventional fuel cell may be directly used as the alloy containing platinum, examples thereof include a platinum-ruthenium alloy and a platinum-cobalt alloy. In addition, in order to facilitate the transportation of electrons in the catalyst layers, a support (referred to as 'catalyst support' hereinafter) in which a conductive material is used as a support and the above catalyst material is supported on the surface of this support is used particularly preferably for the catalyst layers. Examples of the conductive material include conductive carbon materials such as carbon black and carbon nanotube, and ceramic materials such as titanium oxide.

When the present inventors have variously studied a method for further improving power generation performance of MEA, surprisingly, they have obtained novel findings that the power generation performance is remarkably improved by the easiness of transference of water in an electrolyte membrane and the decrease of platinum amount of at least one of the catalyst layers, in particular, the catalyst layer disposed on an anode (hereinafter, this catalyst layer is referred to as 'anode catalyst layer' and the other catalyst layer, that is, the catalyst layer disposed on a cathode when the fuel cell is constituted is referred to as 'cathode catalyst layer'.) when a polymer electrolyte fuel cell (occasionally referred to as 'fuel cell' hereinafter) is constituted, and have completed the present invention based on such findings.

That is, as a means for improving power generation performance of MEA, as a result of studying in detail an electrolyte membrane composed of a polymer electrolyte constituting the MEA (referred to as 'electrolyte membrane' hereinafter) and the catalyst layers distinguished into an anode catalyst layer and a cathode catalyst layer, they have found out that power generation performance of the obtained MEA may be remarkably improved for the reason that an electrolyte membrane in which water transfer resistance calculated by the above formula (F1) is 10 $\mu$m·g/meq or less is used as the electrolyte membrane, and a platinum amount in at least one of the catalyst layers, in particular, the anode catalyst layer among the anode catalyst layer and the cathode catalyst layer is determined in a range of 0.02 to 0.20 mg/cm$^2$.

The reason why such an effect is exerted is not clear, however the present inventors propose a hypothesis as described below. The use of the above electrolyte membrane with low water transfer resistance, that is, electrolyte membrane through which water permeates easily allows water generated in reduction reaction of oxygen in the cathode catalyst layer (referred to as 'cathode reaction' hereinafter) to easily transfer to the opposite anode catalyst layer through the electrolyte membrane, and allows proton transfer resistance to decrease in the electrolyte membrane and the anode catalyst layer. However, the retention of water inside the anode catalyst layer prevents reactant gas of the anode catalyst layer from diffusing, and causes overvoltage of oxidation reaction of hydrogen in the anode catalyst layer (referred to as 'anode reaction' hereinafter) to increase. It is presumed that the platinum amount of the anode catalyst layer in a range of 0.02 to 0.20 mg/cm$^2$ restrains the retention of water as described above, and causes the ability of the above

electrolyte membrane with low water transfer resistance to be sufficiently performed for high power generation characteristics.

The platinum amount contained in the anode catalyst layer is preferably low, more preferably 0.18 $mg/cm^2$ or less and far more preferably 0.16 $mg/cm^2$ or less from the viewpoint of lower costs. The lower limit of the platinum amount contained in the anode catalyst layer is a needed amount for maintaining the anode reaction, preferably 0.04 $mg/cm^2$ or more, and more preferably 0.10 $mg/cm^2$ or more.

Conventionally, in order to improve the efficiency of oxidation-reduction reaction of the catalyst material in the anode catalyst layer or the cathode catalyst layer (these two catalyst layers are occasionally generically referred to as 'catalyst layers' hereinafter), increasing of the catalyst material in the catalyst layers has been widely carried out; however, the present inventors have found out that the control of the platinum amount of at least one of the catalyst layers, in particular, the anode catalyst layer to the above range contrary to such conventional means allows a problem that MEA excellent in power generation performance is provided to be solved, and allows the effect of achieving lower costs of the catalyst layers to be simultaneously completed by the decrease of the platinum amount.

The platinum amount in the catalyst layers is represented by platinum weight per unit area of the catalyst layers widely used in the field.

An electrolyte membrane in which water transfer resistance defined by the above formula (F1) in the present invention is 10 μm·g/meq or less is used as the above electrolyte membrane through which water permeates easily.

The water transfer resistance is an index capable of denoting difficulty in transferring of water when water transfers from one surface of the electrolyte membrane to the other surface thereof. When the formula (F1) for calculating the water transfer resistance is described, thinner membrane thickness of the electrolyte membrane brings shorter transferring distance of water and higher ion-exchange capacity of the electrolyte membrane brings higher water uptake thereof. That is, thinner membrane thickness of the electrolyte membrane and higher ion-exchange capacity thereof bring lower resistance to the permeation of water through the membrane. Accordingly, an electrolyte membrane in which water transfer resistance calculated from the above formula (F1) is lower allows the electrolyte membrane to become a membrane through which water permeates more easily. Thus, a membrane having a water transfer resistance of 9 μm·g/meq or less is preferable. However, too low water transfer resistance brings water uptake increased too much and membrane thickness thinned too much according as ion-exchange capacity of the electrolyte membrane is increased, so that durability of the membrane is deteriorated. Accordingly, water transfer resistance is preferably 4 μm·g/meq or more, and particularly preferably 6 μm·g/meq or more.

As known generally, in a case of operating a fuel cell on the conditions of low humidification, water generated in the cathode catalyst layer needs to be subjected to back diffusion into the anode catalyst layer through the electrolyte membrane. From this point, an electrolyte membrane with lower water transfer resistance exerts the effect of excellent power generation characteristics on the conditions of low humidification, and the effect of remarkably improved power generation performance is exerted by providing such an electrolyte membrane with the anode electrode having the above platinum amount.

On the other hand, the cathode catalyst layer contains a catalyst material, preferably, a catalyst support in a form of being supported on the above support (conductive material), and a polymer electrolyte. Examples of the catalyst material to be used include the same as the above anode catalyst layer as well as complex electrode catalysts (for example, described in 'Fuel Cell and Polymer' edited by Research Group on Materials for PEFC of The Society of Polymer Science, Japan, pages 103 to 112, KYORITSU SHUPPAN CO., LTD., published on November 10, 2005), however, preferably a catalyst material selected from platinum and an alloy containing platinum similarly to the anode catalyst layer. In a case where a catalyst material selected from platinum and an alloy containing platinum is used for a catalyst material of the cathode catalyst layer, overvoltage of the cathode reaction is so high in comparison with that of the anode reaction that the cathode catalyst layer with platinum amount more than that used for the anode catalyst layer is preferable. In the MEA of the present invention, when the platinum amount contained in the cathode catalyst layer is determined as x [$mg/cm^2$] and the platinum amount contained in the anode catalyst layer is determined as y [$mg/cm^2$], it is more preferable that the following formula (F2) is satisfied.

$$x/y \geqq 2 \qquad (F2)$$

Thus, x/y in the formula (F2) is preferably 2 or more, more preferably 3 or more, far more preferably 4 or more and particularly preferably 5 or more. MEA provided with the anode catalyst layer and the cathode catalyst layer so as to satisfy the formula (F2) becomes so low in overvoltage of the cathode reaction that it is more excellent in power generation performance.

The catalyst layers contain a polymer electrolyte for the main purpose of mediating in the exchange of ions

between the catalyst material and the above electrolyte membrane. The polymer electrolyte has ionic conductivity, and an electrolyte membrane for conducting the same ions as the electrolyte membrane in MEA is ordinarily selected therefor. Also, the polymer electrolyte has a function as a binder for binding the catalyst material. The polymer electrolyte contained in the catalyst layers in the MEA of the present invention may be either a hydrocarbon polymer electrolyte or a fluorine polymer electrolyte; examples thereof to be used include a fluorine polymer electrolyte typified by conventionally known Nafion (trade name) manufactured by Dupont, and a hydrocarbon polymer electrolyte selected from an aliphatic polymer electrolyte and an aromatic polymer electrolyte.

The amount of the polymer electrolyte contained in the catalyst layers is selected in a range of allowing the above exchange of ions. In a case where this catalyst material contained in the catalyst layers is a preferred catalyst support, the weight ratio of the weight of the polymer electrolyte based on the weight of the support for supporting the catalyst material is preferably in a range of 0.2 to 1.4, more preferably in a range of 0.4 to 1.2 and particularly preferably in a range of 0.6 to 1.0. The weight ratio of the weight of the polymer electrolyte based on the weight of the support in this range may further facilitate the transportation of electrons in the catalyst layers.

The catalyst layers may contain a component except the above catalyst material and/or catalyst support and polymer electrolyte. This component is optional and is not particularly limited, and the followings are occasionally contained as additives: a water repellent material such as PTFE for the purpose of improving water repellency of the catalyst layers, a pore-forming material such as calcium carbonate for the purpose of improving gas diffusivity of the catalyst layers, a stabilizer such as metallic oxide for the purpose of improving durability of the obtained MEA and the like.

A method of using a liquid composition (hereinafter referred to as the term 'catalyst ink' widely used in the technical field) in which the catalyst material and the polymer electrolyte are dispersed or dissolved in a solvent is easy for forming the catalyst layers and has an advantage that the formation of the catalyst layers by using the catalyst ink may easily control the platinum amount of the catalyst layers.

Examples of the method for forming catalyst layers by using the catalyst ink include such as:

(a) a method for forming catalyst layers in which the catalyst ink is applied to the electrolyte membrane and dried to remove the solvent,

(b) a method for obtaining catalyst layers in which the catalyst ink is applied on a base material capable of being a gas diffusion layer, such as carbon paper, and dried to remove the solvent and produce a laminate of the base material and the catalyst layers and then assemble the laminate by pressing or the like while disposing so that the catalyst layer side of the laminate contacts with the electrolyte membrane, and

(c) a method in which the catalyst ink is applied on a supporting substrate such as a poly(tetrafluoroethylene) film and a polyimide film and dried to remove the solvent and produce a laminate of the supporting substrate and the catalyst layers and then assemble the catalyst layers to the electrolyte membrane by a method of pressing or the like while disposing so that the catalyst layer side of the laminate contacts with the electrolyte membrane, and then peel off only the supporting substrate.

In a case of using the above (b), MEA is obtained in such a form that the catalyst layers are laminated on the electrolyte membrane and the gas diffusion layer is laminated on the surface of the catalyst layers not contacting with the electrolyte membrane, and the MEA of the present invention also includes a form of having the gas diffusion layer if the platinum amount of the catalyst layers and the water transfer resistance of the electrolyte membrane are both within the above ranges.

As a means for applying the catalyst ink to the electrolyte membrane, the base material capable of being the gas diffusion layer, or the supporting substrate, existing applying methods such as die coater, screen printing, a spraying method and ink jet can be ordinarily used.

Among the above forming methods for the catalyst layers, the use of the forming method for the catalyst layers described in (a) causes adhesive property between the electrolyte membrane and the catalyst layers to become so firm in the obtained MEA that a polymer electrolyte fuel cell provided with more excellent power generation characteristics may be obtained.

A method for measuring the platinum amount of the catalyst layers formed by using the above catalyst ink is described.

First, the platinum amount contained in the catalyst ink is measured.

In the above preferable forming method for the catalyst layers (a), the platinum amount in the catalyst layers may be measured from the coated amount of the catalyst ink subjected to the electrolyte membrane and the area of the formed catalyst layers.

Alternatively, the platinum concentration in the solid content of the catalyst ink (those in which the solvent is removed from the catalyst ink) is measured. The weight of the electrolyte membrane before forming the catalyst layers is previously measured in the above (a) to measure the weight after forming the catalyst layers and subtract the weight of the electrolyte membrane, so that the weight of the formed catalyst layers may be measured. The total weight of the

platinum in the formed catalyst layers is measured from the weight of the catalyst layers and the platinum concentration in the solid content of the used catalyst ink, and divided by the area of the catalyst layers, so that the platinum amount may be measured and the catalyst layers having the platinum amount of the present invention may be formed through a preliminary experiment.

Thus, a method for controlling the platinum amount of the catalyst layers in the above (a) is described; in such a method, the catalyst layers with the platinum amount controlled may be obtained even in the above (b) by replacing 'the electrolyte membrane' with the above 'base material capable of being the gas diffusion layer', and the catalyst layers with the platinum amount controlled may be obtained even in the above (c) by replacing 'the electrolyte membrane' with the above 'supporting substrate'. In a case where the catalyst ink has an alloy containing platinum as a catalyst component, the platinum weight composition ratio of the alloy containing platinum may be measured.

In addition, the platinum amount of the catalyst layers of MEA formed as described above may also be measured. In this case, the catalyst layers are peeled off with a cutter or the like, and the platinum amount in the peeled catalyst layers may be measured by using a known analyzing means. In this manner, it may be confirmed that the platinum amount of the catalyst layers in the formed MEA is in a desired range.

The solvent used for preparing the above catalyst ink is not particularly limited, however it is desired that a component except the solvent constituting the catalyst ink is dissolved, dispersed evenly at a molecular level, or an aggregate at the level of nanometer to micrometer is formed and dispersed. The solvent may be a single solvent or a mixed solvent of a plurality of solvents. In a case where a fluorine polymer electrolyte such as Nafion is used for the polymer electrolyte, a mixed solvent composed of water and an organic solvent (such as lower alcohol having about 1 to 3 carbon atoms) is ordinarily used. Examples of a means for mixing the catalyst ink include a method using such as an ultrasonic dispersing device, a homogenizer, a ball mill, a planetary ball mill and a sand mill.

In the catalyst layers obtained as described above, the platinum amount of the anode catalyst layer is 0.02 to 0.20 mg/cm$^2$; preferably, the membrane thicknesses of the anode catalyst layer and the cathode catalyst layer may be each determined respectively in a range such that the platinum amount of the cathode catalyst layer is twice or more larger than that of the anode catalyst layer, and the membrane thicknesses of the two catalyst layers are preferably in a range of 1 to 300 μm, and more preferably in a range of 1 to 100 μm.

[Electrolyte membrane]

The electrolyte membrane used for the MEA of the present invention has a water transfer resistance of 10 μm·g/meq or less as described above, and a fuel cell provided with such an electrolyte membrane allows internal resistance thereof to be decreased on the conditions of low humidification. Examples of a method for determining water transfer resistance at 10 μm·g/meq or less include a method for thinning the membrane thickness of the electrolyte membrane and a method for increasing the ion exchange capacity of the electrolyte membrane. The present invention is not limited to either of them but the proper adjustment of each of them allows water transfer resistance to be controlled, and the method for thinning the membrane thickness is adopted in view of convenience. The membrane thickness is preferably 29 μm or less, more preferably 25 μm or less and particularly preferably 20 μm or less. On the other hand, the membrane thickness is preferably 10 μm or more from the viewpoint of retaining mechanical strength. The membrane thickness is measured under an environment of a temperature of 23°C and a relative humidity of 50%RH by using a means such as a microgauge.

In the polymer electrolyte constituting the electrolyte membrane used in the present invention, a polymer electrolyte having an acidic group and a polymer electrolyte having a basic group may be both applied; the polymer electrolyte having an acidic group is preferably used by reason of obtaining a fuel cell more excellent in power generation performance. The polymer electrolyte having an acidic group has an acidic group such as a sulfonic group ($-SO_3H$), a carboxyl group (-COOH), a phosphonic group ($-PO_3H_2$), a sulfonylimide group ($-SO_2NHSO_2-$) and a phenolic hydroxyl group. Among them, as the acidic group, a sulfonic group and a phosphonic group are more preferable, and a sulfonic group is particularly preferable.

Typical examples of the polymer electrolyte include (A) a polymer electrolyte in which a sulfonic group and/or a phosphonic group are introduced into a hydrocarbon polymer with a main chain composed of aliphatic hydrocarbon; (B) a polymer electrolyte in which a sulfonic group and/or a phosphonic group are introduced into a hydrocarbon polymer with a main chain composed of aliphatic hydrocarbon in which all or a part of hydrogen atoms thereof are substituted with fluorine atoms; (C) a polymer electrolyte in which a sulfonic group and/or a phosphonic group are introduced into a polymer with a main chain having an aromatic ring; (D) a polymer electrolyte in which a sulfonic group and/or a phosphonic group are introduced into a polymer with a main chain including an inorganic unit structure such as a siloxane group and a phosphazene group; (E) a polymer electrolyte in which a sulfonic group and/or a phosphonic group are introduced into a copolymer composed of repeating units of any two kinds or more selected from repeating units constituting a polymer of the above (A) to (D) before a sulfonic group and/or a phosphonic group are introduced thereinto; and (F) a polymer electrolyte in which an acidic compound such as sulfuric acid and phosphoric acid is introduced by

an ionic bond into a hydrocarbon polymer including nitrogen atoms in a main chain or a side chain; and the like.

Examples of the polymer electrolyte of the above (A) include polyvinyl sulfonic acid, polystyrene sulfonic acid and poly(α-methyl styrene) sulfonic acid.

Examples of the polymer electrolyte of the above (B) include Nafion (trade name) manufactured by Dupont, Aciplex (trade name) manufactured by Asahi Kasei and Flemion (trade name) manufactured by Asahi Glass. Also, examples thereof include sulfonic acid-type polystyrene-graft-ethylene-tetrafluoroethylene copolymer (ETFE) constituted with a main chain made by copolymerization of a fluorocarbon vinyl monomer and a hydrocarbon vinyl monomer and a hydrocarbon side chain having a sulfonic group, described in Japanese Unexamined Patent Publication No. 9-102322, and sulfonic acid-type poly(trifluorostyrene)-graft-ETFE in which α,β,β-trifluorostyrene is graft-polymerized to a membrane made by copolymerization of a fluorocarbon vinyl monomer and a hydrocarbon vinyl monomer to introduce a sulfonic group thereinto and obtain a solid polymer electrolyte, described in U. S. Patent Nos. 4,012,303 and 4,605,685, and the like.

Examples of the polymer electrolyte of the above (C) may be those in which a main chain is linked by a hetero atom such as an oxygen atom; examples thereof include those in which a sulfonic group is introduced into each of homopolymers such as polyether ether ketone, polysulfone, polyether sulfone, poly(arylene ether), polyimide, poly((4-phenoxybenzoyl)-1,4-phenylene), polyphenylene sulfide and polyphenylquinoxalene, sulfoarylated polybenzimidazole, sulfoalkylated polybenzimidazole, phosphoalkylated polybenzimidazole (see Japanese Unexamined Patent Publication No. 9-110982, for example) and phosphonated poly(phenylene ether) (see J. Appl. Polym. Sci., 18, 1969 (1974), for example).

Examples of the polymer electrolyte of the above (D) include those in which a sulfonic group is introduced into polyphosphazene described in the document (Polymer Prep., 41, No. 1, 70 (2000)). Also, examples thereof include polysiloxane having a phosphonic group, which is easily produced.

Examples of the polymer electrolyte of the above (E) may be those in which a sulfonic group and/or a phosphonic group are introduced into a random copolymer, those in which a sulfonic group and/or a phosphonic group are introduced into an alternating copolymer, those in which a sulfonic group and/or a phosphonic group are introduced into a graft copolymer, and those in which a sulfonic group and/or a phosphonic group are introduced into a block copolymer. Examples of those in which a sulfonic group is introduced into a random copolymer include a sulfonated polyether sulfone polymer described in Japanese Unexamined Patent Publication No. 11-116679.

Examples of the polymer electrolyte of the above (F) include polybenzimidazole with phosphoric acid contained, described in Japanese Translation of PCT No. 11-503262.

Among the polymer electrolyte exemplified in the above, a hydrocarbon polymer electrolyte is preferable in view of recyclability and costs. Here, 'hydrocarbon polymer electrolyte' signifies a polymer electrolyte in which halogen atoms such as fluorine atoms are 15% by weight or less in the element weight composition ratio. In addition, the polymer electrolytes of the above (C) and (E) are preferable from the viewpoint of exerting high power generation performance and durability at the same time.

Among the hydrocarbon polymer electrolyte, an aromatic polymer electrolyte is preferably included from the viewpoint of heat resistance and ease of recycling. The aromatic polymer electrolyte signifies a polymer compound having an aromatic ring in a main chain of the polymer chain and an acidic group in a side chain and/or a main chain thereof. Aromatic polymer electrolytes soluble in solvent are ordinarily used for the aromatic polymer electrolyte, and these easily allow an electrolyte membrane with a desired membrane thickness by a known solution casting method.

The acidic group of these aromatic polymer electrolytes may be directly substituted in an aromatic ring constituting a main chain of the polymer, bonded to the aromatic ring constituting a main chain through a linking group, or a combination thereof.

'Polymer having an aromatic ring in a main chain' signifies those in which divalent aromatic groups are linked together to constitute a main chain as polyarylene and those in which divalent aromatic groups are linked through a divalent group to compose a main chain. Examples of the divalent group include an ether group, a thioether group, a carbonyl group, a sulfinyl group, a sulfonyl group, an amide group, an ester group, a carbonate ester group, an alkylene group having about 1 to 4 carbon atoms, a fluorine-substituted alkylene group having about 1 to 4 carbon atoms, an alkenylene group having about 2 to 4 carbon atoms and an alkynylene group having about 2 to 4 carbon atoms. Examples of the aromatic groups include aromatic groups such as a phenylene group, a naphthalene group, an anthracenylene group and a fluorenediyl group, and aromatic heterocyclic groups such as a pyridinediyl group, a furandiyl group, a thiophenediyl group, an imidazolyl group, an indolediyl group and a quinoxalinediyl group.

The divalent aromatic groups may have a substituent in addition to the above acidic group; examples of the substituent include an alkyl group having 1 to 20 carbon atoms, an alkoxy group having 1 to 20 carbon atoms, an aryl group having 6 to 20 carbon atoms, an aryloxy group having 6 to 20 carbon atoms, a nitro group and a halogen atom. In a case of having a halogen atom as the substituent and having a fluorine-substituted alkylene group as the divalent group for linking the above aromatic groups, halogen atoms are determined as 15% by weight or less in the element weight composition ratio of the aromatic polymer electrolytes.

Here, among the above electrolyte membranes, the polymer electrolyte of (E) preferred in view of being capable of exerting high proton conductivity is described in detail. Among the above (E), a polymer electrolyte having a segment with an acidic group and a segment with no substantial ion-exchange groups, wherein the copolymerization manner is block copolymerization or graft copolymerization, is preferable. 'Segment with an acidic group' signifies a segment including 0.5 or more on average represented in the number of acidic groups per one structural unit constituting the segment, and more preferably including 1.0 or more on average in one structural unit. 'Segment with no substantial ion-exchange groups' signifies a segment including less than 0.5 on average represented in the number of ion-exchange groups per one structural unit constituting the segment, more preferably including 0.1 or less on average per one repeating unit, and far more preferably including 0.05 or less on average.

Particularly preferable examples of the polymer electrolyte include a polymer electrolyte having a segment with an acidic group, constituting a structural unit with an acidic group selected from the following formulae (1a), (2a), (3a) and (4a) [occasionally referred to as '(1a) to (4a)' hereinafter]

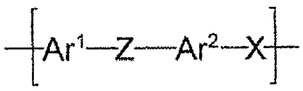
(1a)

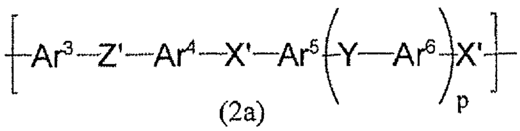
(2a)

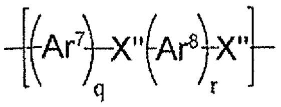
(3a)

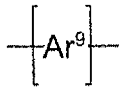
(4a)

(in the formulae, $Ar^1$ to $Ar^9$ each independently denote a divalent aromatic group having an aromatic ring in a main chain and optionally having a side chain with an aromatic ring. At least one of the aromatic ring in a main chain and the aromatic ring in a side chain has an acidic group directly bonded to the aromatic ring. Z and Z' each independently denote either CO or $SO_2$, and X, X' and X" each independently denote either O or S. Y denotes a direct bond or a group represented by the following general formula (10). p denotes 0, 1 or 2, and q and r each independently denote 1, 2 or 3.), and

a segment with no substantial ion-exchange groups, constituting a structural unit of one kind or more selected from the following formulae (1b), (2b), (3b) and (4b) [occasionally referred to as '(1b) to (4b)' hereinafter]

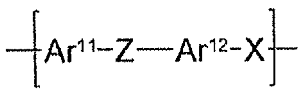
(1b)

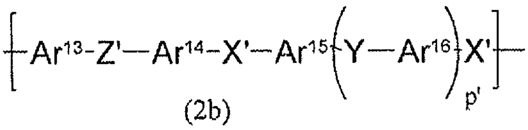
(2b)

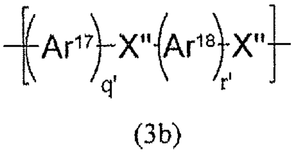
(3b)

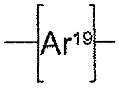
(4b)

(in the formulae, $Ar^{11}$ to $Ar^{19}$ each independently denote a divalent aromatic carbon group optionally having a substituent as a side chain. Z and Z' each independently denote either CO or $SO_2$, and X, X' and X" each independently denote either O or S. Y denotes a direct bond or a group represented by the following general formula (10). p' denotes 0, 1 or 2, and q' and r' each independently denote 1, 2 or 3.),

wherein the copolymerization manner is block copolymerization or graft copolymerization.

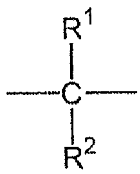

(10)

(in the formula, $R^1$ and $R^2$ each independently denote a hydrogen atom, an alkyl group having 1 to 10 carbon atoms optionally having a substituent, an alkoxy group having 1 to 10 carbon atoms optionally having a substituent, an aryl group having 6 to 18 carbon atoms optionally having a substituent, an aryloxy group having 6 to 18 carbon atoms optionally having a substituent or an acyl group having 2 to 20 carbon atoms optionally having a substituent, and $R^1$ and $R^2$ may be linked to form a ring.)

$Ar^1$ to $Ar^9$ in the formulae (1a) to (4a) denote a divalent aromatic group. Examples of the divalent aromatic group include divalent monocyclic aromatic groups such as 1,3-phenylene and 1,4-phenylene, divalent condensed ring aromatic groups such as 1,3-naphthalenediyl, 1,4-naphthalenediyl, 1,5-naphthalenediyl, 1,6-naphthalenediyl, 1,7-naphthalenediyl, 2,6-naphthalenediyl and 2,7-naphthalenediyl, and hetero aromatic groups such as pyridinediyl, quinoxalinediyl and thiophenediyl; preferred are divalent monocyclic aromatic groups.

$Ar^1$ to $Ar^9$ may also be substituted with an alkyl group having 1 to 10 carbon atoms optionally having a substituent, an alkoxy group having 1 to 10 carbon atoms optionally having a substituent, an aryl group having 6 to 18 carbon atoms optionally having a substituent, an aryloxy group having 6 to 18 carbon atoms optionally having a substituent or an acyl group having 2 to 20 carbon atoms optionally having a substituent.

$Ar^1$ to $Ar^9$ has at least one acidic group in an aromatic ring constituting a main chain. As described above, a sulfonic group is more preferable as the acidic group.

The polymerization degree of a segment constituting a structural unit selected from these formulae (1a) to (4a) is 5 or more, preferably 5 to 1000 and more preferably 10 to 500. There is an advantage that the polymerization degree of 5 or more exerts sufficient proton conductivity as a polymer electrolyte for a fuel cell while a polymerization degree of 1000 or less brings easier production.

On the other hand, $Ar^{11}$ to $Ar^{19}$ in the formulae (1b) to (4b) each independently denote a divalent aromatic group. Examples of the divalent aromatic group include divalent monocyclic aromatic groups such as 1,3-phenylene and 1,4-phenylene, divalent condensed ring aromatic groups such as 1,3-naphthalenediyl, 1,4-naphthalenediyl, 1,5-naphthalenediyl, 1,6-naphthalenediyl, 1,7-naphthalenediyl, 2,6-naphthalenediyl and 2,7-naphthalenediyl, and hetero aromatic groups such as pyridinediyl, quinoxalinediyl and thiophenediyl; preferred are divalent monocyclic aromatic groups.

$Ar^{11}$ to $Ar^{19}$ may also be substituted with an alkyl group having 1 to 18 carbon atoms, an alkoxy group having 1 to 10 carbon atoms, an aryl group having 6 to 10 carbon atoms, an aryloxy group having 6 to 18 carbon atoms or an acyl group having 2 to 20 carbon atoms.

Here, a substituent of the above divalent aromatic group ($Ar^1$ to $Ar^9$ and $Ar^{11}$ to $Ar^{19}$) is briefly exemplified. Examples of the alkyl group include a methyl group, an ethyl group and a butyl group. Examples of the alkoxy group include a methoxy group, an ethoxy group and a butoxy group. Examples of the aryl group include such as a phenyl group, and examples of the aryloxy group include such as a phenoxy group. Examples of the acyl group include such as an acetyl group and a butyryl group.

The polymerization degree of a segment constituting a structural unit selected from the formulae (1b) to (4b) is 5 or more, preferably 5 to 1000 and more preferably 10 to 500. It is preferable that the polymerization degree of 5 or more allows sufficient mechanical strength as a polymer electrolyte for a fuel cell while the polymerization degree of 1000 or less brings easier production.

Thus, in an electrolyte membrane applied to the MEA of the present invention, a preferred polymer electrolyte has a segment with an acidic group, constituting a structural unit represented by the above formulae (1a) to (4a), and a segment with no substantial ion-exchange groups, constituting a structural unit represented by the above formulae (1b) to (4b); preferred is a block copolymer in consideration of ease in producing the polymer electrolyte. More preferred examples of a combination of block copolymers include combinations of segments of <a> to <h> in the following Table 1.

Table 1

| block copolymers | structural units constituting a segment with an acidic group | structural units constituting a segment with no substantial ion-exchange groups |
|---|---|---|
| <a> | (1a) | (2b) |
| <b> | (1a) | (2b) |
| <c> | (2a) | (2b) |
| <d> | (2a) | (2b) |
| <e> | (3a) | (2b) |
| <f> | (3a) | (2b) |
| <g> | (4a) | (2b) |
| <h> | (4a) | (2b) |

The above <b>, <c>, <d>, <g> and <h> are more preferable, and <g> are <h> are particularly preferable.

Specific examples of appropriate block copolymers include the following structures.

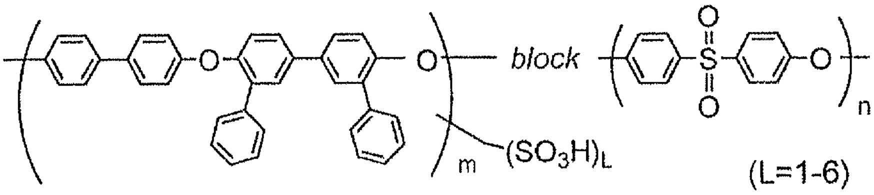

(1)

(L=1-6)

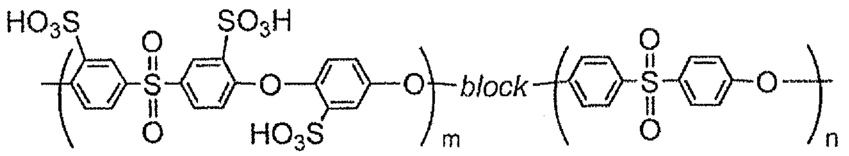

(2)

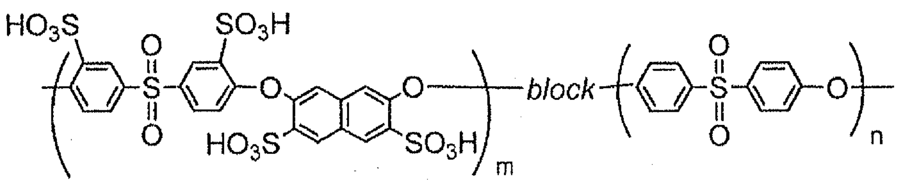

(3)

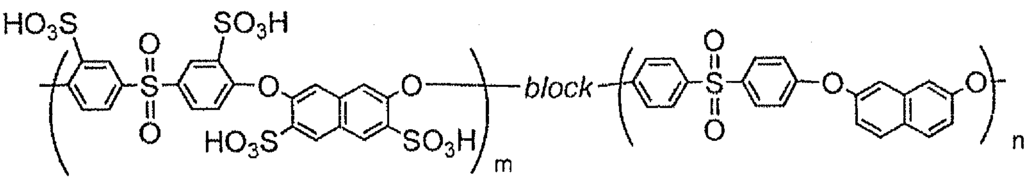

(4)

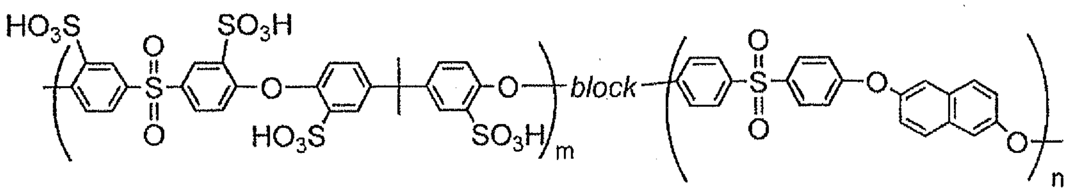

(5)

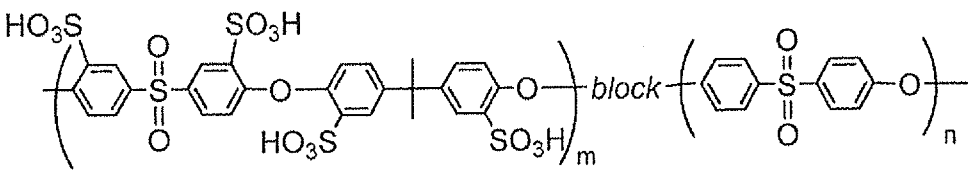

(6)

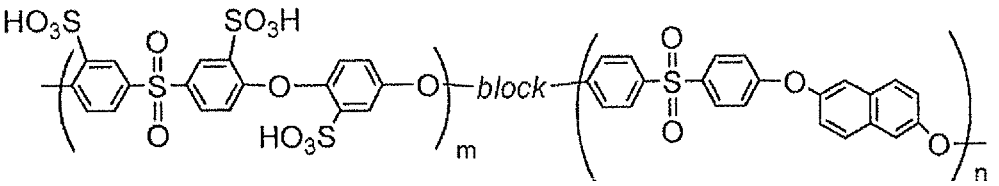

(7)

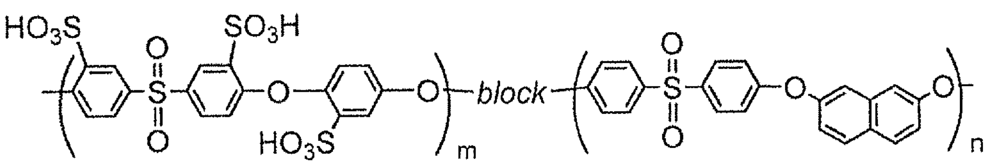

(8)

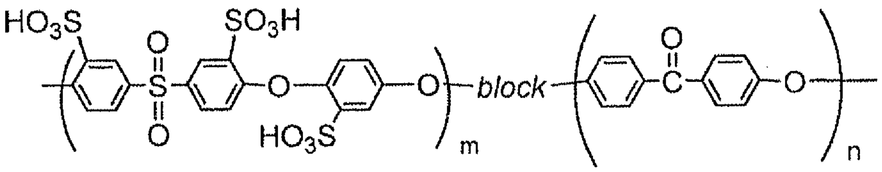

(9)

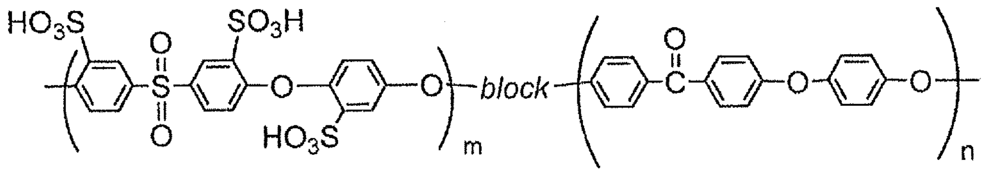

(10)

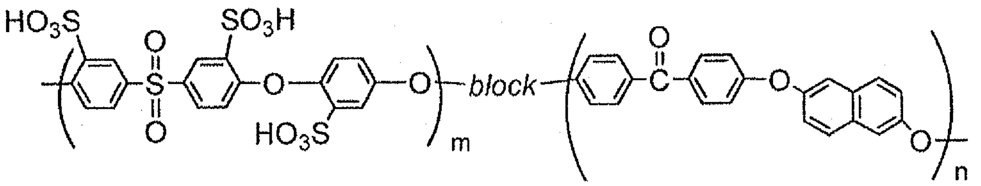

(11)

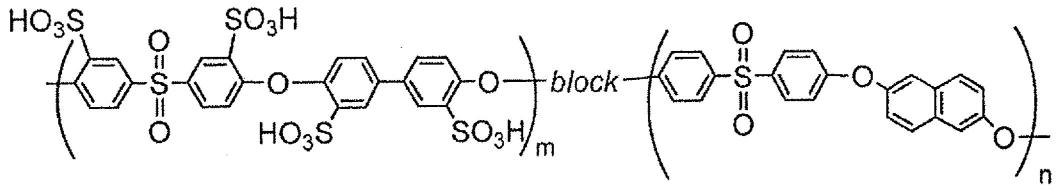

(12)

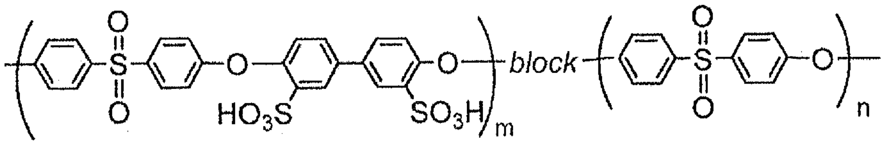

(13)

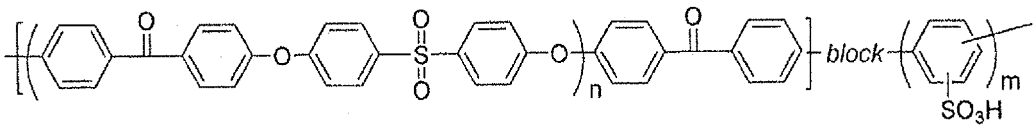

(14)

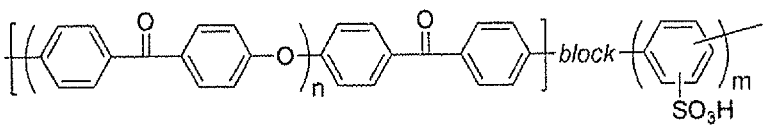

(15)

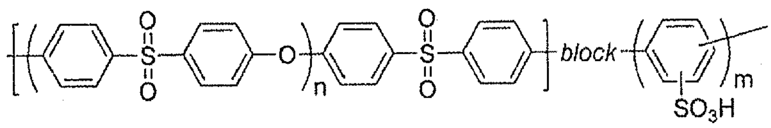

(16)

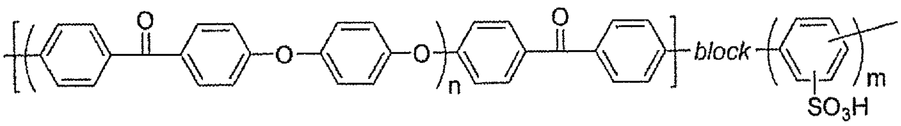

(17)

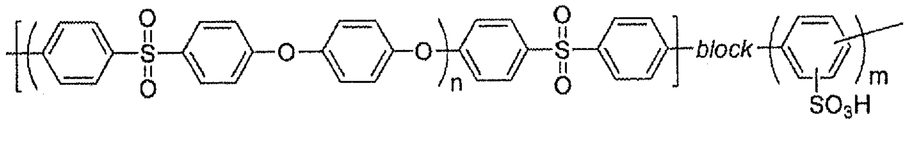

(18)

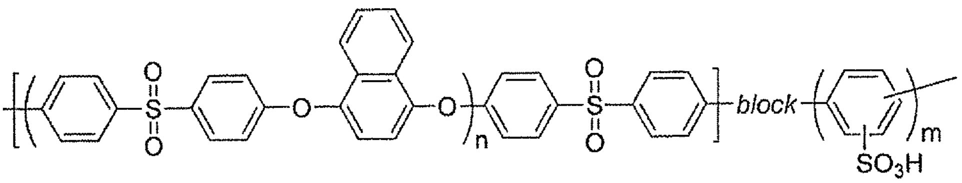

(19)

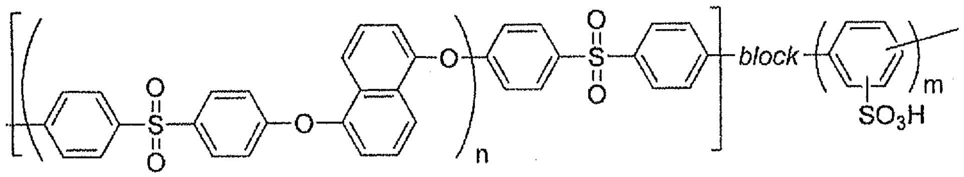

(20)

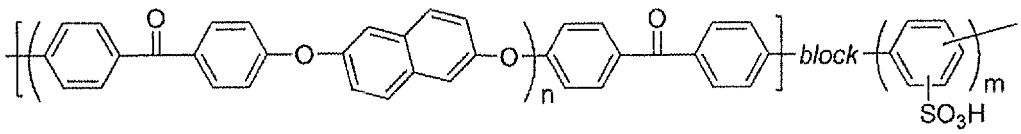

(21)

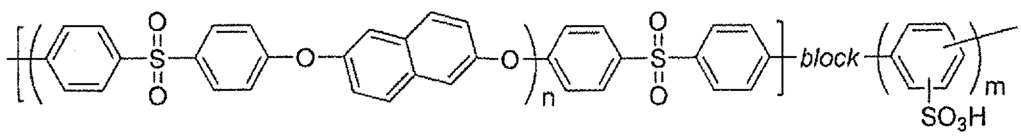

(22)

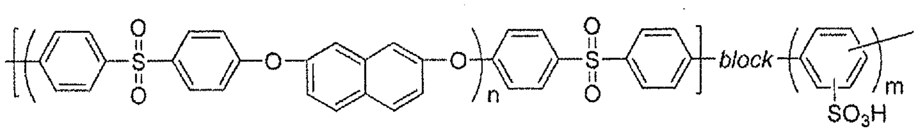

(23)

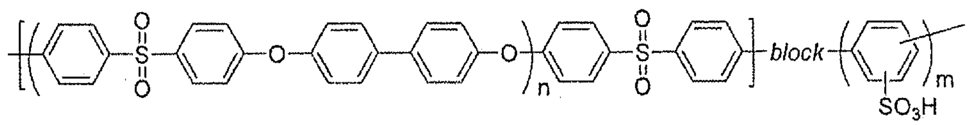

(24)

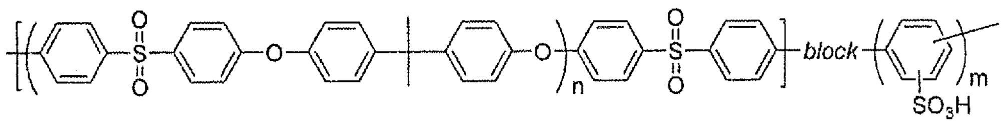

(25)

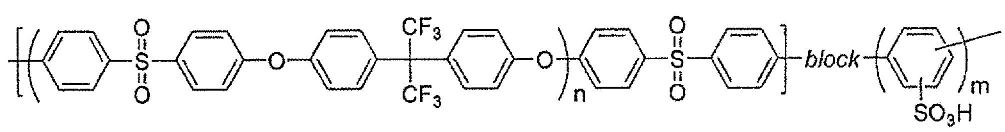

(26)

In the above (1) to (26), the representation of 'Block' signifies a block copolymer each having block composed of a repeating unit in the parentheses. The blocks may be in a form of being directly bonded to each other, or in a form of being linked to each other through a proper atom or atom group.

More preferable examples of the ion-conducting polymer include the above (2), (7), (8), (16), (18), (22) to (25) and the like, and particularly preferable examples thereof include (16), (18), (22), (23), (25) and the like.

When a polymer electrolyte is made into a membrane, the polymer electrolyte preferably allows a membrane having both of a domain with an acidic group for contributing to proton conductivity and a domain with no substantial ion-exchange groups for contributing to mechanical strength, that is, a membrane in which these domains have a phase-separated structure. More preferable polymer electrolyte allows a microphase-separated membrane. When observed by a transmission electron microscope (TEM), for example, the microphase-separated structure used herein indicates a structure such that a fine phase (microdomain) having high density of a block (A) with an acidic group and a fine phase (microdomain) having high density of a block (B) with no substantial ion-exchange groups are mixed, and the domain width, namely, identity period of each of the microdomain structures is several to several hundreds nm. Preferable examples thereof include a membrane having a microdomain structure of 5 to 100 nm. A block copolymer or a graft copolymer having both of the above segment with the acidic group and the segment with no substantial ion-exchange groups are preferred in easily obtaining such a membrane with a microphase-separated structure for the reason that the segments of different kinds are bonded to each other by a chemical bond, whereby microscopic phase separation in the order of molecular chain size is easily generated.

Typical examples of the particularly preferred block copolymers include a block copolymer having an aromatic polyether structure, composed of a block with an ion-exchange group and a block with no substantial ion-exchange groups, described in Japanese Unexamined Patent Publication Nos. 2005-126684 and 2005-139432, for example; and a block copolymer having a polyarylene block with an acidic group, described in International Publication WO2006/95919 Pamphlet already disclosed by the present applicant, may form an electrolyte membrane for achieving ionic conductivity and water resistance at a high level, so that MEA more excellent in power generation performance may be provided by the synergistic effect with the catalyst layers of the present invention.

In the molecular weight of the above polymer electrolyte, the optimum range may be properly determined by a structure thereof, preferably 1000 to 1000000 represented by number-average molecular weight in terms of polystyrene by GPC (gel permeation chromatography) method. The lower limit of the number-average molecular weight is 5000 or more, and above all preferably 10000 or more, while the upper limit thereof is 500000 or less, and above all preferably 300000 or less.

In addition, the electrolyte membrane according to MEA of the present invention may contain other components in a range without remarkably deteriorating proton conductivity in accordance with desired properties, in addition to the polymer electrolyte exemplified above. Examples of the other components include additives used in ordinary polymers, such as a plasticizer, a stabilizer, a release agent and a water retention agent.

In particular, peroxide is produced in the catalyst layers during the operation of a fuel cell and this peroxide is changed into a radical kind while diffused into the electrolyte membrane, which occasionally deteriorates the polymer electrolyte constituting the electrolyte membrane. In order to avoid such a disadvantage, a stabilizer for imparting radical resistance is preferably added to the electrolyte membrane. Preferred examples of the additive include a stabilizer for improving chemical stability such as oxidation resistance and radical resistance. Examples of the stabilizer include additives such as exemplified in Japanese Unexamined Patent Publication Nos. 2003-201403, 2003-238678 and 2003-282096. Alternatively, examples thereof include a phosphonic group-containing polymer represented by the following formulae;

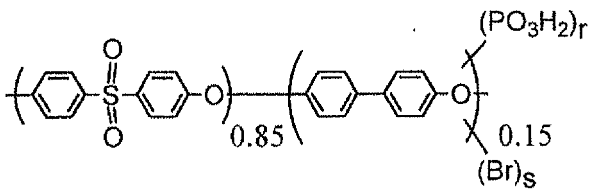

(r=1 to 2.5, s=0 to 0.5, a numerical subscript of repeating units denotes the mole fraction of repeating units)

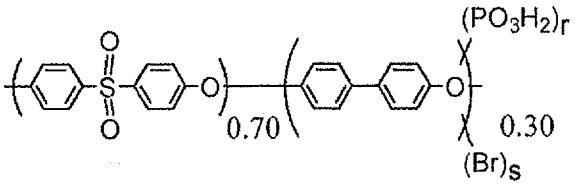

(r=1 to 2.5, s=0 to 0.5, a numerical subscript of repeating units denotes the mole fraction of repeating units) described in Japanese Unexamined Patent Publication Nos. 2005-38834 and 2006-66391. The representation of '-(P (O)(OH)$_2$)$_r$' and '-(Br)$_s$' in the above formulae signifies r on average of phosphonic groups and s on average of bromo groups per biphenylyleneoxy unit.

In a case of containing such additives, the ion exchange capacity is measured in the electrolyte membrane containing the additives and polymer electrolyte to calculate the above water transfer resistance. Accordingly, in the case of using such additives, the content is preferably within 20% by weight based on the total weight of the membrane, and it is not preferable that the content more than 20% by weight deteriorates the properties of the electrolyte membrane to make it difficult to control the above water transfer resistance.

Upon obtaining the electrolyte membrane by using the solution casting method as described above, the electrolyte membrane may be formed by using a polymer electrolyte solution obtained by dissolving the polymer electrolyte and the additives in a proper solvent.

A composite membrane in which a polymer electrolyte capable of forming an electrolyte membrane and a predetermined support are composited may also be used for the purpose of improving mechanical strength of the above electrolyte membrane. Examples of the support include a base material in the shape of fibril and porous membrane. In a case of using the composite membrane as an electrolyte membrane, the membrane thickness and the ion exchange capacity of the obtained composite membrane are measured and the water transfer resistance calculated by the above formula (F1) needs to be 10 μm·g/meq or less.

[Polymer electrolyte fuel cell]

Next, a fuel cell provided with the MEA of the above preferred embodiment is described.

Fig. 1 is a view schematically showing the cross-sectional configuration of a fuel cell according to the preferred embodiment. As shown in Fig. 1, a fuel cell 10 is provided with an anode catalyst layer 14a and a cathode catalyst layer 14b on both sides of the above electrolyte membrane (proton conductive membrane) 12 so as to hold the cell 10 therebetween, and each of gas diffusion layers 16a and 16b and separators 18a and 18b are sequentially formed on both of the catalyst layers. MEA 20 is constituted with the electrolyte membrane 12 and both of the catalyst layers 14a and 14b holding the membrane 12 therebetween.

The gas diffusion layers 16a and 16b are placed so as to hold both sides of MEA 20 therebetween, and promote the diffusion of raw material gas into the catalyst layers 14a and 14b. These gas diffusion layers 16a and 16b are preferably constituted with a porous material having electron conductivity; carbon paper or the like described as the base material of the above producing method (b) for the catalyst layers is used, and the carbon paper capable of efficiently transporting the raw material gas to the catalyst layers 14a and 14b is selected.

A membrane-electrode-gas diffusion layer assembly (MEGA) is constituted with these electrolyte membrane 12, catalyst layers 14a and 14b, and gas diffusion layers 16a and 16b.

The separators 18a and 18b are formed of a material having electron conductivity; examples of such a material include such as carbon, resin mold carbon, titanium and stainless steel. A groove, not shown, as a flow path for supplying fuel gas to the anode catalyst layer 14a and oxidant gas to the cathode catalyst layer 14b is formed on the separators 18a and 18b, respectively.

Then, the fuel cell 10 may be obtained by holding MEGA as described above between a pair of the separators 18a and 18b to assemble these.

The fuel cell 10 may also be those in which the cell having the above structure is sealed by a gas seal body or the like. In addition, a plurality of the fuel cells 10 with the above structure are connected in series, and then may also be subjected to practical use as a fuel cell stack. Then, the fuel cell having such a constitution may be used as a polymer electrolyte fuel cell in a case where fuel is hydrogen, and as a direct methanol fuel cell in a case where fuel is methanol aqueous solution.

The present invention is hereinafter described in further detail by way of examples and is not limited to these examples.

[Synthesis of polymer electrolyte 1]

2.10 parts by weight of polyether sulfone having a terminal Cl group (SUMIKAEXCEL PES5200P, manufactured by Sumitomo Chemical, Mn=$5.2\times10^4$, Mw=$8.8\times10^4$), 5.70 parts by weight of sodium 2,5-dichlorobenzenesulfonate, 9.32 parts by weight of 2,2-bipyridyl, 142.23 parts by weight of dimethyl sulfoxide (hereinafter referred to as 'DMSO') and 55.60 parts by weight of toluene were put in a reaction vessel under an atmosphere of nitrogen and stirred. Subsequently, the pressure of the inside of the vessel was reduced to around 10 kPa and the internal temperature was heated to a temperature of 60 to 70°C, and reflux and dehydration was carried out for 8 hours.

After dehydrating, toluene was distilled out and 15.407 parts by weight of bis(1,5-cyclooctadiene)nickel (0) was added thereto while retaining the internal temperature at a temperature of 65°C. After adding, the solution was stirred at an internal temperature of 70°C for 5 hours. After cooling the reaction solution to room temperature, the polymer was precipitated into methanol out of the reaction solution, which was further washed with 6N-hydrochloric acid and water to obtain a polymer electrolyte 1 of a block copolymer represented by the following formula (n and m denote average degree of polymerization of each repeating unit). The ion exchange capacity was 2.5 meq/g.

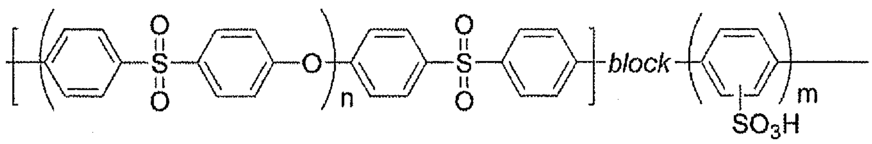

[Synthesis of polymer electrolyte 2]

A polymer electrolyte 2 as a block copolymer was synthesized by using SUMIKAEXCEL PES5200P (manufactured by Sumitomo Chemical) while referring to the method described in Examples 7 and 21 of International Publication WO2007/04327 Pamphlet. The structure of a segment according to the block copolymer was represented by the same chemical structural formula as the polymer electrolyte 1. The ion exchange capacity was 2.3 meq/g.

[Preparation of additive 1]

4,4'-dihydroxydiphenyl sulfone, 4,4'-dihydroxybiphenyl and 4,4'-dichlorodiphenyl sulfone were reacted at a molar ratio of 4:6:10 in the presence of potassium carbonate by using diphenyl sulfone as a solvent to thereby prepare a random copolymer represented by the following chemical formula. In the formula, a numeral of the parentheses denotes the molar ratio of each repeating unit.

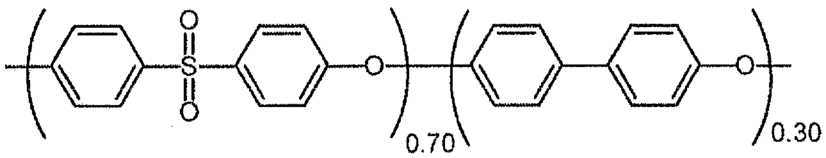

Subsequently, this copolymer was subjected to bromination and phosphonation treatment in accordance with the method described in Japanese Unexamined Patent Publication No. 2003-282096, and thereafter hydrolyzed further to thereby obtain an additive 1 having a structure with approximately 0.2 of a bromo group and approximately 1.7 of phosphonic groups (a group represented by $-P(O)(OH)_2$) per unit derived from a biphenol structure.

[Production of electrolyte membrane 1]

A mixture in which the polymer electrolyte 1 and the additive 1 obtained above were mixed at a weight ratio of 9:1 was dissolved in DMSO so as to have a concentration of approximately 8% by weight to prepare a polymer electrolyte solution. Subsequently, this polymer electrolyte solution was added dropwise onto a glass plate. Then, the polymer electrolyte solution was uniformly applied over the glass plate by using a wire coater. On this occasion, the coating thickness was controlled by changing the clearance of the wire coater. After applying, the polymer electrolyte solution was dried at 80°C at normal pressure. Then, the obtained membrane was immersed in 1N-hydrochloric acid, thereafter

washed with ion exchange water, and dried at normal temperature to thereby obtain an electrolyte membrane 1 having a membrane thickness of 20 μm.

[Production of electrolyte membrane 2]

An electrolyte membrane 2 having a membrane thickness of 30 μm was obtained by the same method except for changing the control of the coating thickness in the producing method for the electrolyte membrane 1.

[Production of electrolyte membrane 3]

An electrolyte membrane 3 having a membrane thickness of 20 μm was obtained by the same method except for using the polymer electrolyte 2 instead of the polymer electrolyte 1 in the producing method for the electrolyte membrane 1.

[Production of electrolyte membrane 4]

An electrolyte membrane 4 having a membrane thickness of 30 μm was obtained by the same method except for changing the control of the coating thickness in the producing method for the electrolyte membrane 3.

[Measurement of ion exchange capacity]

The electrolyte membrane was immersed in 5 mL of a 0.1N-sodium hydroxide aqueous solution, and thereafter 50 mL of ion exchange water was further added thereto and left for 2 hours. Thereafter, 0.1N-hydrochloric acid was gradually added to this solution with the electrolyte membrane immersed to thereby perform titration and measure neutralization point. Then, the ion exchange capacity of the electrolyte membrane was calculated from the absolute dry weight of the electrolyte membrane and the amount of hydrochloric acid required for the above neutralization.

The electrolyte membrane 1 and the electrolyte membrane 2 are equal in ion exchange capacity for the reason that the polymer electrolyte constituting them is identical. The electrolyte membrane 3 and the electrolyte membrane 4 are equal in ion exchange capacity for the reason that the polymer electrolyte constituting them is identical.

[Example 1]

First, catalyst ink necessary for producing a membrane-electrode assembly was produced. 1.00 g of platinum-support carbon with platinum supported (platinum content; 45% by weight) was charged into 12.4 mL of a commercially available 5% by weight of Nafion solution (solvent: mixture of water and lower alcohol), and further 50.20 g of ethanol and 7.04 g of water were added thereto. The obtained mixture was sonicated for 1 hour and thereafter stirred by a stirrer for 5 hours to obtain catalyst ink 1.

Subsequently, a membrane-electrode assembly was produced. First, the above catalyst ink was applied to a region 5.2 cm square in the middle of one surface of the electrolyte membrane 1 produced above (ion exchange capacity of 2.5 meq/g, membrane thickness of 20 μm, water transfer resistance of 8 μm•g/meq) by using a large-sized pulse spray catalyst forming apparatus (spray gun type: NCG-FC(CT), manufactured by Nordson). On this occasion, the distance from an exhaust port to the membrane and the stage temperature were set at 6 cm and 75°C, respectively. In the same manner, eight-time recoating was performed and thereafter the membrane 1 was left on the stage for 15 minutes to form a cathode catalyst layer by removing the solvent. The platinum amount of the cathode catalyst layer was calculated to 0.60 mg/cm$^2$ from the composition of the formed cathode catalyst layer and the weight of the coating. Subsequently, the catalyst ink was also applied to the other surface thereof in the same manner as in the cathode catalyst layer except for changing the coating amount of the catalyst ink to form an anode catalyst layer having a platinum amount of 0.20 mg/cm$^2$, whereby a membrane-electrode assembly was obtained.

A fuel cell was produced by using a commercially available JARI (Japan Automobile Res. Institution) standard cell. That is, carbon cloth as a gas diffusion layer and a separator made of carbon obtained by cutting and processing a groove for a gas flowing path were disposed on both outsides of the membrane-electrode assembly obtained above, and a current collector and an end plate were further disposed sequentially on the outsides thereof to assemble a fuel cell having an effective membrane area of 25 cm$^2$ by tightening these with a bolt.

Humidified hydrogen and humidified air were supplied to the anode and the cathode respectively while maintaining the obtained fuel cell at 80°C. On this occasion, the back pressure in a gas outlet of the cell was set to be 0.1 MPaG. The humidification of each raw material gas was performed by passing the gas through a bubbler, and the water temperature of a bubbler for hydrogen and the water temperature of a bubbler for air were set to be 45°C and 55°C, respectively. Here, the gas flow rate of hydrogen and the gas flow rate of air were set to be 529 mL/min and 1665 mL/min,

respectively. Then, the value of current density at a voltage of 0.4 V is shown in Table 2. Also, in the same test, the value of current density at a voltage of 0.2 V is shown in Table 2.

[Example 2]

1.00 g of platinum-support carbon with platinum supported (platinum content; 50% by weight) was charged into 11.4 mL of a commercially available 5% by weight of Nafion solution (solvent: mixture of water and lower alcohol), and further 50.20 g of ethanol and 7.04 g of water were added thereto. The obtained mixture was sonicated for 1 hour and thereafter stirred by a stirrer for 5 hours to obtain catalyst ink 2. A membrane-electrode assembly in which the platinum amount of an anode catalyst layer was 0.17 $mg/cm^2$ and the platinum amount of a cathode catalyst layer was 0.60 $mg/cm^2$ was obtained by the same method as in Example 1 except for using the electrolyte membrane 3 instead of the electrolyte membrane 1. A fuel cell generating test was performed for this membrane-electrode assembly by the same method as in Example 1. The value of current density at a voltage of 0.4 V and the value of current density at a voltage of 0.2 V are shown in Table 2.

[Comparative Example 1]

A membrane-electrode assembly and a fuel cell were produced by the same method as in Example 1 except for changing the platinum amount of the anode catalyst layer to 0.60 $mg/cm^2$ to perform the generating test. The value of current density at a voltage of 0.4 V and the value of current density at a voltage of 0.2 V are shown in Table 2.

[Comparative Example 2]

A membrane-electrode assembly and a fuel cell were produced by the same method as in Example 1 except for using the electrolyte membrane 2 having a thickness of 30 μm (ion exchange capacity of 2.5 meq/g, membrane thickness of 30 μm, water transfer resistance of 12 μm·g/meq) and changing the platinum amount of the anode catalyst layer to 0.60 $mg/cm^2$ to perform the generating test. The value of current density at a voltage of 0.4 V and the value of current density at a voltage of 0.2 V are shown in Table 2.

[Comparative Example 3]

A membrane-electrode assembly in which the platinum amount of an anode catalyst layer was 0.17 $mg/cm^2$ and the platinum amount of a cathode catalyst layer was 0.60 $mg/cm^2$ was obtained by the same method as in Example 2 except for using the electrolyte membrane 4 instead of the electrolyte membrane 3. The generating test of this membrane-electrode assembly was performed, and the value of current density at a voltage of 0.4 V and the value of current density at a voltage of 0.2 V are shown in Table 2.

[Comparative Example 4]

A membrane-electrode assembly in which the platinum amount of an anode catalyst layer was 0.34 $mg/cm^2$ and the platinum amount of a cathode catalyst layer was 0.60 $mg/cm^2$ was obtained by the same method as in Example 2. The generating test of this membrane-electrode assembly was performed, and the value of current density at a voltage of 0.4 V and the value of current density at a voltage of 0.2 V are shown in Table 2.

Table 2

| | membrane thickness (μm) | ion exchange capacity of electrolyte membrane (meq/g) | water transfer resistance (μm·g/meq) | platinum amount of anode catalyst layer ($mg/cm^2$) | current density at 0.4 V ($A/cm^2$) | current density at 0.2 V ($A/cm^2$) |
|---|---|---|---|---|---|---|
| Example 1 | 20 | 2.5 | 8 | 0.20 | 1.90 | > 2.00 |
| Example 2 | 20 | 2.3 | 9 | 0.17 | 1.72 | > 2.00 |
| Comparative Example 1 | 20 | 2.5 | 8 | 0.60 | 1.30 | 1.66 |

(continued)

| | membrane thickness (μm) | ion exchange capacity of electrolyte membrane (meq/g) | water transfer resistance (μm·g/meq) | platinum amount of anode catalyst layer ($mg/cm^2$) | current density at 0.4 V ($A/cm^2$) | current density at 0.2 V ($A/cm^2$) |
|---|---|---|---|---|---|---|
| Comparative Example 2 | 30 | 2.5 | 12 | 0.60 | 1.61 | 1.84 |
| Comparative Example 3 | 30 | 2.3 | 13 | 0.17 | 0.97 | 1.27 |
| Comparative Example 4 | 20 | 2.3 | 9 | 0.34 | 1.57 | 1.86 |

It has proved from Examples 1 and 2 and Comparative Examples 1 to 4 that the membrane-electrode assembly and the fuel cell composed of this of the present invention can obtain greatly high power generation performance.

## Claims

1. A membrane-electrode assembly comprising catalyst layers disposed on both surfaces of an electrolyte membrane, wherein water transfer resistance of said electrolyte membrane, calculated by the following formula (F1), is 10 μm·g/meq or less and a platinum amount contained in at least one of the catalyst layers is 0.02 to 0.20 $mg/cm^2$.

   [Water transfer resistance] = [membrane thickness of electrolyte membrane (μm)]/ [ion exchange capacity of electrolyte membrane (meq/g)] (F1)

2. A membrane-electrode assembly comprising an anode catalyst layer disposed on one surface of an electrolyte membrane and a cathode catalyst layer disposed on the other surface thereof, wherein water transfer resistance of said electrolyte membrane, calculated by the following formula (F1), is 10 μm•g/meq or less and a platinum amount contained in said anode catalyst layer is 0.02 to 0.20 $mg/cm^2$.

   [Water transfer resistance] = [membrane thickness of electrolyte membrane (μm)]/ [ion exchange capacity of electrolyte membrane (meq/g)] (F1)

3. The membrane-electrode assembly according to Claim 2, wherein the following formula (F2) is satisfied when the platinum amount of the cathode catalyst layer is determined as x [$mg/cm^2$] and the platinum amount of the anode catalyst layer is determined as y [$mg/cm^2$].

$$x/y \geqq 2 \qquad (F2)$$

**4.** The membrane-electrode assembly according to any one of Claims 1 to 3, wherein the membrane thickness of said electrolyte membrane is 29 μm or less.

**5.** The membrane-electrode assembly according to any one of Claims 1 to 4, wherein said electrolyte membrane contains a hydrocarbon polymer electrolyte.

**6.** A polymer electrolyte fuel cell being provided with the membrane-electrode assembly according to any one of Claims 1 to 5.

**7.** A method for producing a membrane-electrode assembly comprising the steps described in the following (i) and (ii);

(i) the step of producing an electrolyte membrane, such that water transfer resistance calculated by the following formula (F1) is 10 μm·g/meq or less, from a hydrocarbon polymer electrolyte; and
(ii) the step of forming a catalyst layer having a platinum amount of from 0.02 to 0.20 mg/cm$^2$ in such a manner that catalyst ink containing a catalyst material of at least one kind selected from platinum and an alloy containing platinum, a polymer electrolyte and a solvent is applied on one surface of the electrolyte membrane obtained in said (i) to thereafter remove the solvent from the membrane to which the catalyst ink is applied.

[Water transfer resistance] =

[membrane thickness of electrolyte membrane (μm)]/

[ion exchange capacity of electrolyte membrane (meq/g)]

(F1)

Fig.1

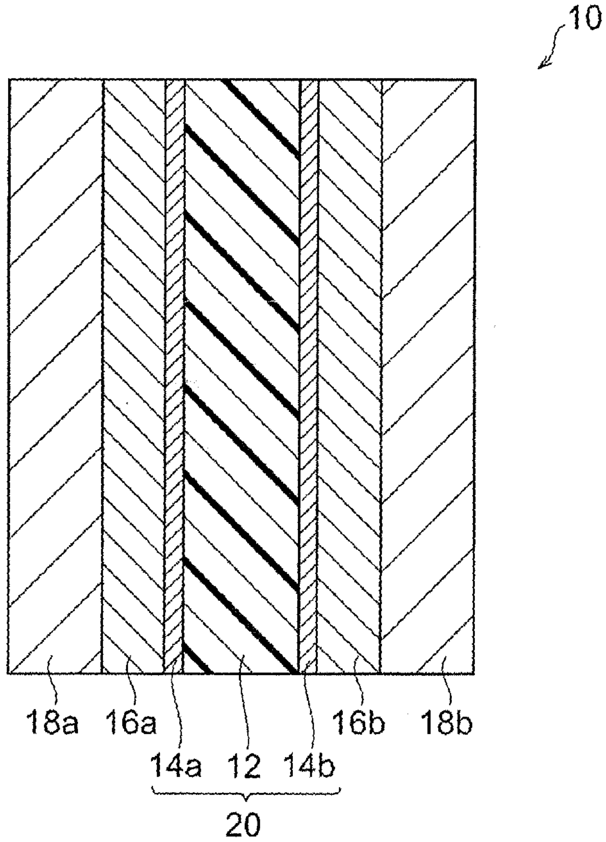

**INTERNATIONAL SEARCH REPORT**

International application No.
PCT/JP2007/072144

A. CLASSIFICATION OF SUBJECT MATTER
*H01M8/02*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2005-158265 A (Honda Motor Co., Ltd.), 16 June, 2005 (16.06.05), Claims; Par. Nos. [0053], [0058], [0103] to [0115]<br>& US 2004/0197632 A1<br>Claims; Par. Nos. [0066], [0071], [0123] to [0135] | 1-2,4-7<br>3 |
| Y | JP 10-199550 A (Mitsubishi Heavy Industries, Ltd.), 31 July, 1998 (31.07.98), Claims; Par. No. [0012]<br>(Family: none) | 1-7 |

[X] Further documents are listed in the continuation of Box C. [ ] See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 23 January, 2008 (23.01.08) | 05 February, 2008 (05.02.08) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2007/072144

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-164854 A (Ube Industries, Ltd.), 10 June, 2004 (10.06.04), Claims; Par. Nos. [0067], [0084] & US 2004/0265676 A1 Claims; Par. Nos. [0089], [0123] | 1-7 |
| Y | JP 2004-220951 A (Sony Corp.), 05 August, 2004 (05.08.04), Claims; Par. No. [0034] (Family: none) | 1-7 |
| Y | JP 2006-260901 A (Asahi Kasei Corp.), 28 September, 2006 (28.09.06), Claims; Par. No. [0028] (Family: none) | 1-7 |
| Y | JP 2006-252948 A (Japan Gore-Tex Inc.), 21 September, 2006 (21.09.06), Claims; Par. Nos. [0048] to [0050] & US 2006/0204833 A1 Claims; Par. Nos. [0051] to [0054] | 3 |
| Y | JP 2005-203308 A (Toyota Motor Corp.), 28 July, 2005 (28.07.05), Claims; Par. No. [0028] (Family: none) | 3 |
| Y | JP 2004-319139 A (Toyota Motor Corp.), 11 November, 2004 (11.11.04), Claims; Par. No. [0020] (Family: none) | 3 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9245802 A
- JP 2004152593 A
- JP 9102322 A
- US 4012303 A
- US 4605685 A
- JP 9110982 A
- JP 11116679 A
- JP 11503262 PCT
- JP 2005126684 A
- JP 2005139432 A
- WO 200695919 A
- JP 2003201403 A
- JP 2003238678 A
- JP 2003282096 A
- JP 2005038834 A
- JP 2006066391 A
- WO 200704327 A


### Non-patent literature cited in the description


- Fuel Cell and Polymer. KYORITSU SHUPPAN CO., LTD, 10 November 2005, 103-112
- *J. Appl. Polym. Sci.,* 1974, vol. 18, 1969
- *Polymer Prep.,* 2000, vol. 41 (1), 70